# EUROPÄISCHE PATENTSCHRIFT

(11) **EP 1 578 588 B1**
(45) Veröffentlichungstag und Bekanntmachung des Hinweises auf die Patenterteilung: **19.04.2006**
(21) Anmeldenummer: 03789174.4
(22) Anmeldetag: 08.12.2003
(51) Int. Cl.: B29C 47/30, B29C 47/08

(54) **SCHMELZBLASKOPF MIT ZU DEN SPALTPLATTEN DEFINIERT BEFESTIGTEM UND SENKRECHT ABNEHMBAREM DÜSENPAKET**
MELT BLOW HEAD COMPRISING A NOZZLE BLOCK WHICH IS FIXED IN A DEFINED POSITION IN RELATION TO THE SLIT PLATES AND CAN BE VERTICALLY REMOVED FROM THE SAME
TETE DE FUSION-SOUFFLAGE AVEC UN BLOC A BUSE QUI EST FIXE DANS UNE POSITION DETERMINEE EN RELATION DES PLATES ET QUI PEUT ETRE ENLEVE VERTICALEMENT DU MEME

(30) Priorität: 12.12.2002 DE 10258170
(43) Veröffentlichungstag der Anmeldung: 28.09.2005
(73) Patentinhaber: RIETER AUTOMATIK GmbH, D-63762 Grossostheim (DE)
(72) Erfinder: NICKEL, Axel, 63864 Glattbach (DE); ROHM, Wolfgang, 63762 Grossostheim (DE)
(74) Vertreter: Bardehle, Heinz
(86) Internationale Anmeldenummer: PCT/EP2003/013900
(87) Internationale Veröffentlichungsnummer: WO 2004/052617

(56) Entgegenhaltungen:
- US-A- 3 947 202
- US-A- 5 632 938

## Beschreibung

Die Erfindung bezieht sich auf einen Schmelzblaskopf mit in einem Düsenpaket angeordneter geradliniger Reihe von Düsenbohrungen, die zur Erzeugung von aus einer Schmelze gebildeten Endlosfäden dienen, denen als Längsspalte ausgebildete Blaszuführungsspalte zweier Spaltplatten zur schräg zu den Düsenbohrungen zuzuführender Blasluft zugeordnet sind und denen über einen oder mehrere Verteiler im Schmelzblaskopf die Schmelze zugeführt wird, wobei der bzw. die Verteiler durch eine Zuleitung mit der Schmelze versorgt werden.

Ein solcher Schmelzblaskopf ist in der europäischen Patentschrift 0 625 939 B1 (siehe DE 693 19 582 T2) beschrieben und dargestellt. Die bekannte Vorrichtung dient dazu, aus den von ihr abgegebenen Endlosfäden auf einem umlaufenden Band ein Fadengewirr zu erzeugen, das dann als bekanntes Faservlies Verwendung finden kann. Der weiter unten beschriebene erfindungsgemäße Schmelzblaskopf lässt sich vorteilhaft in der gleichen Weise verwenden. Bei der bekannten Vorrichtung bildet das Düsenpaket durch Verschraubung mit den Spaltplatten eine Einheit, die zur Reinigung oder Wartung in Längsrichtung aus einem Gehäuse herausziehbar angeordnet ist. Die Endlosfäden werden aus dem Schmelzblaskopf in senkrechter Richtung ausgepresst und gelangen dann nach Durchlaufen einer Kühlstrecke in wirrer Lage zueinander auf ein Transportband, das das Gebilde aus wirren Endlosfäden als Vlies abtransportiert. Die für die Erzeugung der Endlosfäden notwendige Schmelze wird senkrecht von oben durch das Gehäuse in den Schmelzblaskopf eingeleitet, die Zuführung der Blasluft erfolgt von beiden Seiten her über Luftkammem, von denen aus die Blasluft dann zu den Blaszuführungsspalten geleitet wird. Das seitliche Herausziehen des Schmelzblaskopfes aus dem Gehäuse ist dadurch bedingt, dass aus dem Gehäuse senkrecht nach oben die Zuführung für die Schmelze herausragt. Für das Herausziehen des Schmelzblaskopfes in Richtung der Reihe der Düsenbohrungen ist ein erheblicher Platzbedarf erforderlich, der mindestens der Länge des Schmelzblaskopfes entspricht. Dies ist aus Gründen der Einreihung einer derartigen Anlage zur Herstellung eines Vlieses häufig ein Erschwernis, da aus baulichen Gründen dieser Platzbedarf nicht ohne weiteres zur Verfügung gestellt werden kann.

Der Erfindung liegt die Aufgabe zugrunde, die für die Wartung bzw. Reinigung des Schmelzblaskopfes erforderliche Anpassungsfähigkeit des Schmelzblaskopfes an die Umgebung zu verbessern. Dies geschieht erfindungsgemäß dadurch, dass die Zuleitung im Schmelzblaskopf von einem seitlichen Einlass, der mit einem Schmelzerohr über einen abnehmbaren Anschluss verbunden ist, über eine Umlenkung in im wesentlichen senkrechter Richtung zu dem Verteiler führt, wobei das Düsenpaket gegenüber den Spaltplatten in definierter Lage befestigt und von diesen in etwa senkrechter Richtung abnehmbar gelagert ist.

Durch die Umlenkung der Zuleitung für die Schmelze im Düsenpaket, gemäß der die Führung der Schmelze im Düsenpaket von einem seitlichen Einlass über die Umlenkung zu einer im Wesentlichen senkrechten Richtung zu dem Verteiler führt, bleibt der Raum oberhalb des Düsenpaketes frei von Zuleitungen, so dass das Düsenpaket von den Spaltplatten in senkrechter Richtung abgehoben werden kann, wozu das Düsenpaket auf den Spaltplatten abnehmbar gelagert ist. Der Raum oberhalb des Düsenpaketes ist im Allgemeinen frei von irgendwelchen Bauelementen oder Anlageteilen, so dass die Abnehmbarkeit des Düsenpaketes in senkrechter Richtung zu einem problemlos gestalteten Reinigungs- bzw. Wartungsvorgang führt.

Bei der erfindungsgemäßen Gestaltung des Schmelzblaskopfes lässt sich weiterhin eine automatische Ausrichtung des Düsenpakets zu den Spaltplatten erzielen, und zwar dadurch, dass das Düsenpaket durch parallel zur Reihe der Düsenbohrungen angeordnete Luftzuführungsblöcke mit horizontaler und vertikaler Wandung seitlich eingeschlossen ist, an denen das Düsenpaket mit einer Stufe mit horizontalem und vertikalem Schenkel anliegt, wobei je eine Spaltplatte an einem Luftzuführungsblock gegen einen Anschlag anliegt und zur Zuführung der Blasluft zu den Längsspalten einen Zwischenraum zum Luftzuführungsblock freilässt.

Aufgrund der formschlüssigen Anlage der beiden Schenkel der Stufe jeweils an einem Luftzuführungsblock wird das Düsenpaket hinsichtlich seiner Lage in Vertikal- und Horizontalrichtung genau gehalten, wobei durch die teilweise Anlage jeder Spaltplatte an einem Luftzuführungsblock gegen einen Anschlag auch deren Lage genau eingehalten wird. Bei einem Auseinandernehmen von Düsenpaket und Spaltplatten und danach erfolgender Wiederzusammensetzung erhalten Düsenpaket und Spaltplatten ihre genau aufeinander ausgerichtete Lage zurück, so dass sich bei diesem Wiederzusammensetzen eine besondere Justierung zu dem Düsenpaket erübrigt. Diese genaue Lage ist für das richtige Funktionieren des Schmelzblaskopfes von entscheidender Bedeutung.

Um im Falle einer Abnahme des Düsenpakets von den Spaltplatten den weiteren Zustrom von Schmelze zu unterbinden, versieht man zweckmäßig das Schmelzerohr im Bereich des Anschlusses zum Düsenpaket mit einem Absperrventil.

Damit beim Abheben des Düsenblocks das abgenommene Schmelzerohr diesen Vorgang nicht behindert, ordnet man zweckmäßig das Schmelzerohr mit seinem Anschluss in dessen abgenommener Lage gegenüber dem Einlass beweglich an. Es ist auch möglich, anstelle einer besonderen Beweglichkeit des Schmelzerohrs dem Anschluss eine verformbare Dichtung zu geben, die im Bereich ihrer Verformbarkeit einen Zwischenraum zwischen Anschluss und Einlass ergibt, wodurch das Anheben des Düsenpakets ungehindert vom Schmelzerohr vor sich gehen kann.

Erfahrungsgemäß bilden sich in Richtung des Blasluftstromes hinter den Blaszuführungsspalten Luftwirbel, die unter Umständen zu einem verfrühten Zusammenprall der einzelnen Endlosfäden und damit deren Zusammenkleben führen können. Um dies durch einen vergleichmäßigten Luftstrom zu vermeiden, gestaltet man die dem Düsenpaket abgewandte Seite der Spaltplatten zweclanäßig in Form einer konkaven Abrundung, die einen weitgehend wirbelfreien Verlauf von mit der Blasluft mitgerissener Umgebungslauf gewährleistet.

In den Figuren sind Ausführungsbeispiele der Erfindung dargestellt. Es zeigen:
- Figur 1: den Schmelzblaskopf mit Heizkasten in perspektivischer Sicht;
- Figur 2: die gleiche Anordnung in Seitensicht im Schnitt;
- Figur 2a: den Bereich der Längsspalte 25 und 26 aus Figur 2 in vergrößerter Darstellung;
- Figur 3: die Anordnung gemäß Figur 2 mit gerundeten Spaltplatten.

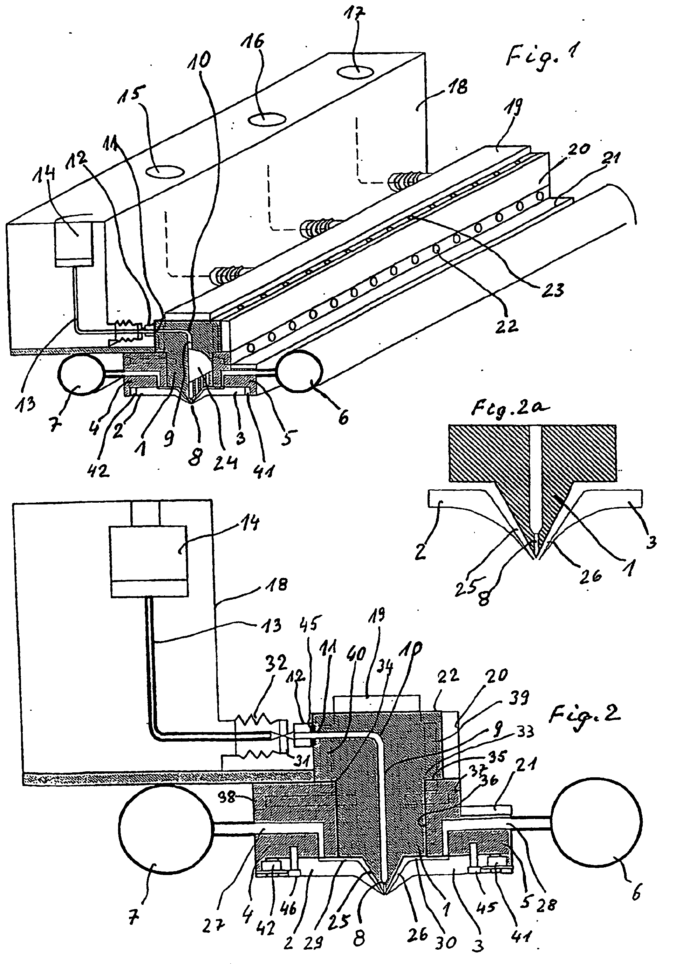

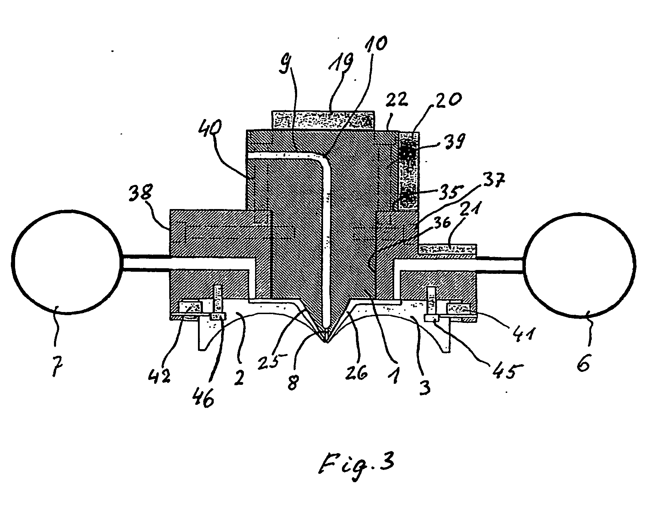

Figur 1 zeigt einen Schmelzblaskopf mit dem Düsenpaket 1 und zwei Spaltplatten 2 und 3, und zwar in perspektivischer Sicht, wobei dieser Schmelzblaskopf seitlich von den Luftzuführungsblöcken 4 und 5 eingeschlossen ist. Das hier einstückig dargestellte Düsenpaket 1 kann auch aus mehreren Bauteilen zu einem Block zusammengesetzt sein. Die beiden Luftzuführungsblöcke 4 und 5 werden von den beiden Luftleitungen 6 und 7 in bekannter Weise gespeist. Die Spaltplatten 2 und 3 bilden für die Zuführung von Blasluft sich über die Länge des Düsenpakets erstreckende Längsspalte neben den Düsenbohrungen 8, worauf im Zusammenhang mit der Figur 2 näher eingegangen wird.

Im Düsenpaket 1 verläuft für die Zuführung der Schmelze die Zuleitung 9, die über die Umlenkung 10 zu dem Einlass 11 im Düsenpaket führt, wo über den Anschluss 12 die Verbindung zu der Schmelzleitung 13 erfolgt. Wie bereits vorher angemerkt, bestehen solche Düsenpakete meist aus mehreren Platten oder Teilen. Gemäß Figur 1 sind in der dargestellten Anlage vier Schmelzepumpen 14, 15, 16 und 17 vorgesehen, von denen aus, wie im Zusammenhang mit der Schmelzleitung 13 dargestellt, die Versorgung der betreffenden Düsenbohrungen im Verlauf des Düsenpakets 1 erfolgt. Die Schmelzepumpen 14, 15, 16 und 17 und die zugehörigen Schmelzeleitungen 13 sind in dem Heizkasten 18 untergebracht, in dem die dort befindliche Schmelze auf Schmelztemperatur gehalten wird.

Weiterhin sind in der Figur 1 Heizplatten 19, 20 und 21 dargestellt, auf die im Zusammenhang mit der Figur 2 näher eingegangen wird. Sodann zeigt die Figur 1 die Köpfe 22 und 23 einer Reihe von Schrauben, auf die ebenfalls im Zusammenhang mit der Figur 2 näher eingegangen wird.

In der Figur 2 ist die Anordnung gemäß Figur 1 von der Seite gesehen im Schnitt dargestellt. Das Düsenpaket 1 bildet einen die Zuleitung 9 und die Umlenkung 10 enthaltenden Block, in dem durch den Verteiler 24 (siehe Figur 1) im Düsenpaket 1 die zugeführte Schmelze auf die einzelnen Düsenbohrungen 8 aufgeteilt wird.

Die Gestaltung des Endes der Düsenbohrung 8 und der angrenzenden Enden der Spaltplatten 2 und 3 ist der Figur 2a zu entnehmen, die eine Vergrößerung des betreffenden Teils aus Figur 2 darstellt.

Die beiden Spaltplatten 2 und 3 lassen zu dem Ende der Düsenbohrung 8 jeweils einen Längsspalt 25 und 26 frei, aus dem Blasluft ausströmt und die aus der Düsenbohrung 8 austretende Schmelze kühlt und abführt. Den Längsspalten 25 und 26 wird Blasluft von den Luftrohren 6 und 7 her über die Leitungen 27 und 28 zugeführt, die innerhalb der Luftzuführungsblöcke 4 und 5 verlaufen und in Zwischenräumen 29 und 30 enden, die zwischen den Spaltplatten 2 und 3 einerseits und dem Düsenpaket 1 sowie den Luftzuführungsblöcken 4 und 5 bestehen.

Die vorstehend beschriebene Gestaltung und Wirkung vom Ende der Düsenbohrung 8 mit den Längsspalten 25 und 26 ist bekannt und prinzipiell in der eingangs erwähnten Druckschrift dargestellt.

Die Zuleitung 9 führt über die Umlenkung 10 zu dem seitlichen Einlass 11, der mit dem Anschluss 12 verbunden ist, der eine verformbare Dichtung 45 aufweist. Dem Anschluss 12 ist das Absperrventil 31 vorgeordnet, das dazu dient, im Falle der weiter unten beschriebenen Abnahme des Düsenpakets 1 den weiteren Zufluss von Schmelze aus der Schmelzepumpe 14 zu verhindern. Am Ende der Schmelzeleitung 13 führt diese durch den Faltenbalg 32, der dafür sorgt, dass zwischen dem Anschluss 12 und der Schmelzeleitung 13 eine gewisse Flexibilität bestehen kann.

Das Düsenpaket 1 besitzt die Stufe 33 und 34, die jeweils einen horizontalen und einen vertikalen Schenkel 35, 36 besitzt (nur mit Bezugszeichen im Zusammenhang mit der Stufe 33 eingezeichnet). Diese Schenkel 35 und 36 liegen an entsprechenden Wandungsteilen der Luftzuführungsblöcke 4 und 5 an, die horizontal und vertikal verlaufen und damit ein Einpassen der Stufen 33 und 34 ermöglichen. Die Verbindung des Düsenpakets 1 mit den Luftzuführungsblöcken 4 und 5 erfolgt mittels der Horizontalschrauben 37 und 38 (Horizontalschrauben 37 mit den Schraubenköpfen 22 siehe Figur 1) und den Vertikalschrauben 39 und 40 (Schraubenköpfe 23 der Vertikalschrauben 39 gemäß Figur 1). Mit dem Anziehen dieser Schrauben ergibt sich eine feste Einheit einschließlich des Düsenpaketes 1 und der beiden Spaltplatten 2 und 3, womit sich eine genaue Ausrichtung der Düsenbohrung 8 auf die Spalte 25 und 26 ergibt. Dabei wird den Spaltplatten 2 und 3 in Richtung auf die Düsenbohrung 8 dadurch eine besondere Ausrichtung gegeben, dass die Spaltplatten 2 und 3 mit ihren den Längsspalten 2 und 3 abgewandten Enden gegen die einsetzbaren, in ihrer Dicke variablen, einen Anschlag bildenden Distanzstücke 41 und 42 anlaufen und gegen diese mittels der Schrauben 43, 44 angezogen werden. Das Andrücken der Spaltplatten 2 und 3 gegen die Luftzuführungsblocks 4 und 5 erfolgt mittels der Schrauben 45 und 46.

Wenn das Düsenpaket 1 aus irgendwelchen Gründen, z.B. zur Reinigung und Wartung, abgenommen werden soll, so sind die Horizontalschrauben 37 und 38 und die Vertikalschrauben 39 und 40 zu lösen und der Anschluss 12 aufzutrennen, womit das Düsenpaket 1 nach oben hin von den Spaltplatten 2 und 3 abgehoben und aus der Anordnung herausgenommen werden kann. Das Wiedereinsetzen des Düsenpakets 1 erfolgt in umgekehrter Richtung, wobei das Düsenpaket 1 lediglich zwischen die beiden Luftzuführungsblöcke 4 und 5 einzuschieben ist und die vorher gelösten Schrauben wieder einzusetzen und anzuziehen sind. Dabei nimmt das Düsenpaket 1 eine durch die Stufen 33 und 34 definierte Lage ein. Wenn z.B. der Luftzuführungsblock 4 eine durch eine weitere äußerliche Baueinheit definierte Lage besitzt, so ergibt sich für die weiteren Bauteile der Einheit, bestehend aus Düsenpaket 1, Luftzuführungsblock 5 und Spaltplatten 2 und 3 eine in sich geschlossene definierte Lage, so dass es nachträglich einer besondere Justierung von Düsenbohrungen 8 in bezug auf die Längsspalten 25 und 26 nicht bedarf.

Ein weiterer Vorteil der sich aus der Figur 2 ergebenden Gestaltung der Anlage besteht darin, dass die für das Auseinandernehmen und Zusammensetzen der genannten Einheit erforderlichen Schrauben 37, 38, 39 und 40 eine Annäherung an die Einheit lediglich von der Seite bzw. von oben erfordern, wo normaler Weise genügend Freiraum für das Verdrehen der Schrauben existiert.

In der Figur 2 sind die bereits im Zusammenhang mit der Figur erwähnten Heizplatten 19, 20 und 21 dargestellt, die zur notwendigen Erwärmung des Düsenpakets 1 mit den Luftzuführungsblocks 4 und 5 sorgen.

Figur 3 zeigt eine Anordnung, die bis auf die Gestaltung der Spaltplatten vollständig der Anordnung gemäß Figur 2 entspricht. Die in der Figur 3 dargestellten Spaltplatten 45 und 46 besitzen auf ihrer den Luftzuführungsblöcken 4 und 5 und dem Düsenpaket 1 abgewandten Seite eine konkave Abrundung, so dass vorbeistreichende Luft aus der Umgebung gleichmäßig und weitgehend ohne Verwirbelung von den aus den Längsspalten 25 und 26 austretenden Luftströmungen mitgerissen wird, was eine Verwirbelung der aus den Düsenbohrungen 8 austretenden Endlosfäden weitgehend vermeidet.

## Patentansprüche

1. Schmelzblaskopf mit in einem Düsenpaket (1) angeordneter geradliniger Reihe von Düsenbohrungen (8), die zur Erzeugung von aus einer Schmelze gebildeten Endlosfäden dienen, denen als Längsspalte (25, 26) ausgebildete Blaszuführungsspalte zweier Spaltplatten (2, 3) zur schräg zu den Düsenbohrungen (8) zuzuführender Blasluft zugeordnet sind und denen über einen oder mehrere Verteiler (24) im Schmelzblaskopf die Schmelze zugeführt wird, wobei der bzw. die Verteiler (24) durch eine Zuleitung (9) mit der Schmelze versorgt werden, **dadurch gekennzeichnet, dass** die Zuleitung (7) im Schmelzblaskopf von einem seitlichen Einlass (11), der mit einem Schmelzerohr (13) über einen abnehmbaren Anschluss (12) verbunden ist, über eine Umlenkung (10) in im wesentlichen senkrechter Richtung zu dem Verteiler (24) führt, wobei das Düsenpaket (1) gegenüber den Spaltplatten (2, 3) in definierter Lage befestigt und von diesen in etwa senkrechter Richtung abnehmbar gelagert ist.

2. Schmelzblaskopf nach Anspruch 1, **dadurch gekennzeichnet, dass** das Düsenpaket (1) durch parallel zur Reihe der Düsenbohrungen (8) angeordnete Luftzuführungsblöcke (4, 5) mit horizontaler und vertikaler Wandung seitlich eingeschlossen ist, an denen das Düsenpaket (1) mit einer Stufe (33, 34) mit horizontalem und vertikalem Schenkel (35, 36) anliegt, wobei je eine Spaltplatte (2, 3) an einem Luftzuführungsblock (4, 5) gegen einen Anschlag (41, 42) anliegt und zur Zuführung der Blasluft zu den Längsspalten (25, 26) einen Zwischenraum (29, 30) zum Luftzuführungsblock (4, 5) freilässt.

3. Schmelzblaskopf nach Anspruch 1 oder 2, **dadurch gekennzeichnet, dass** das Schmelzerohr (13) im Bereich des Anschlusses (12) mit einem Absperrventil (31) versehen ist.

4. Schmelzblaskopf nach einem der Ansprüche 1 bis 3, **dadurch gekennzeichnet, dass** das Schmelzerohr (13) mit seinem Anschluss (12) in dessen abgenommener Lage gegenüber dem Einlass (11) beweglich angeordnet ist.

5. Schmelzblaskopf nach einem der Ansprüche 1 bis 3, **dadurch gekennzeichnet, dass** der Anschluss (12) eine verformbare Dichtung (47) aufweist.

6. Schmelzblaskopf nach einem der Ansprüche 1 bis 5, **dadurch gekennzeichnet, dass** die Spaltplatten (2, 3) auf ihrer dem Düsenpaket (1) abgewandten Seite in einer konkaven Abrundung verlaufen.

## Claims

1. Melt-blow head with a rectilinear row of nozzle bores (8) arranged in a nozzle bar (1), said nozzle bores (8) serving to produce endless filaments formed from a melt, said nozzle bores (8) being associated with blowing slots, in the form of longitudinal slots (25, 26), of two slot-plates (2, 3) for feeding blowing air at an angle to the nozzle bores (8) and to which nozzle bores (8) the melt is fed through one or more distributors (24) in the melt-blow head, the distributor(s) (24) being supplied with the melt through a feeding pipe (9), **characterized in that** the feeding pipe (9) in the melt-blow head leads from a lateral inlet (11) via a redirecting means (10) in an essentially vertical direction to the distributor (24), said inlet (11) being connected to a melt pipe (13) through a removable connector (12), the nozzle bar (1) being fixed in a defined position with respect to the slot-plates (2, 3) and being removable therefrom in an approximately vertical direction.

2. Melt-blow head according to claim 1, **characterized in that** the nozzle bar (1) is laterally enclosed by air feed blocks (4, 5) with horizontal and vertical walls, said air feed blocks (4, 5) being arranged parallel to the row of nozzle bores (8), said air feed blocks (4, 5) being contacted by the nozzle bar (1) with a step (33, 34) with horizontal and vertical legs (35, 36), a slot-plate (2, 3) being in contact with each air feed block (4, 5) against a stop (41, 42) and leaving open a space (29, 30) with respect to the air feed block (4, 5) for supplying the blow air to the longitudinal slots (25, 26).

3. Melt-blow head according to claim 1 or 2, **characterized in that** the melt pipe (13) is provided in the region of the connector (12) with a shut-off valve (31).

4. Melt-blow head according to any one of claims 1 to 3, **characterized in that** the melt pipe (13) is movable with its connector (12), with the latter removed, in relation to the inlet (11).

5. Melt-blow head according to any one of claims 1 to 3, **characterized in that** the connector (12) has a deformable seal (47).

6. Melt-blow head according to any one of claims 1 to 5, **characterized in that** the slot-plates (2, 3) extend in a concave rounded section on their side opposite the nozzle bar (1).

## Revendications

1. Tête de fusion-soufflage avec une rangée rectiligne, disposée en un groupe de buses (1), de trous de buses (8) qui servent à réaliser des filaments continus formés à partir de matière fondue, auxquels des interstices de soufflage de deux plaques à interstices (2, 3) conformés en interstices longitudinaux (25, 26) sont associés pour amener l'air de soufflage en l'oblique aux trous de buses (8) et auxquels la matière fondue est amenée par l'intermédiaire d'un ou de plusieurs distributeurs (24) ménagés dans la tête de fusion-soufflage, le, respectivement les distributeurs (24) étant alimentés en matière fondue par une conduite d'amenée (9), **caractérisée en ce que** la conduite d'amenée (9) ménagée dans la tête de fusion-soufflage mène d'une entrée latérale (11), reliée à un tuyau à matière fondue (13) par l'intermédiaire d'un raccord déconnectable (12), au distributeur (24) dans une direction sensiblement verticale en passant par un coude (10), le groupe de buses (1) étant fixé dans une position définie par rapport aux plaques à interstices (2, 3) et étant monté avec la possibilité d'être retiré de celles-ci dans une direction sensiblement verticale.

2. Tête de fusion-soufflage selon la revendication 1, **caractérisée en ce que** le groupe de buses (1) est bordé par des blocs d'amenée d'air (4, 5) à parois horizontale et verticale qui sont disposés parallèlement à la rangée de trous de buses (8) et contre lesquels le groupe de buses (1) est appliqué par l'intermédiaire d'un décrochement (33, 34) à branches horizontale et verticale (35, 36), chacune des plaques à interstices (2, 3) étant appliquée contre un bloc d'amenée d'air (4, 5) au niveau d'une butée (41, 42) et respectant un intervalle (29, 30) par rapport au bloc d'amenée d'air (4, 5) pour amener l'air de soufflage aux interstices longitudinaux (25, 26).

3. Tête de fusion-soufflage selon la revendication 1 ou 2, **caractérisée en ce que** le tuyau à matière fondue (13) est pourvu d'une vanne d'arrêt (31) dans la zone du raccord (12).

4. Tête de fusion-soufflage selon une des revendications 1 à 3, **caractérisée en ce que** le tuyau à matière fondue (13) avec son raccord (12) est monté mobile par rapport à l'entrée (11) lorsque ce dernier est déconnecté.

5. Tête de fusion-soufflage selon une des revendications 1 à 3, **caractérisée en ce que** le raccord (12) comporte un joint d'étanchéité déformable (47) .

6. Tête de fusion-soufflage selon une des revendications 1 à 5, **caractérisée en ce que**, sur leur face opposée au groupe de buses (1), les plaques à interstices (2, 3) présentent un arrondi concave.
